# EUROPÄISCHE PATENTSCHRIFT

(11) **EP 0 652 224 B1**
(45) Veröffentlichungstag und Bekanntmachung des Hinweises auf die Patenterteilung: **01.09.1999**
(21) Anmeldenummer: 94116523.5
(22) Anmeldetag: 20.10.1994
(51) Int. Cl.: C07F 17/02, C07F 17/00

(54) **Verfahren zur Herstellung von Metallocenen in einem Reaktionsschritt**
Process for the preparation of metallocenes in a one-step synthesis
Procédé de préparation de metallocènes en une seule opération

(30) Priorität: 30.10.1993 DE 4337230
(43) Veröffentlichungstag der Anmeldung: 10.05.1995
(73) Patentinhaber: BASF Aktiengesellschaft, 67063 Ludwigshafen (DE)
(72) Erfinder: Rohde, Wolfgang, Dr., D-67346 Speyer (DE); Görtz, Hans-Helmut, Dr., D-67251 Freinsheim (DE); Handrich, Udo, D-67454 Hassloch (DE)

(56) Entgegenhaltungen:
- US-A- 2 834 796
- US-A- 2 870 183
- CHEMICAL ABSTRACTS, vol. 91, no. 21, 19. November 1979, Columbus, Ohio, US; abstract no. 175478t, HANDLIR, K. ET AL. 'A SIMPLE SYNTHETIC METHOD FOR CHROMOCENE AND VANADOCENE' Seite 678 ; & Z. CHEM., Bd.19, Nr.7, 1979 Seiten 265 - 266

## Beschreibung

Die vorliegende Erfindung betrifft Verfahren zur Herstellung von Metallocenen.

Die Herstellung von Metallocenen wird üblicherweise so ausgeführt, daß ein Metallsalz mit einem Alkali- oder Erdalkalimetall-Cyclopentadienid in einem inerten Lösungsmittel umgesetzt wird. Für eine Metallocenherstellung in technischem Maßstab bedeutet dies, daß in einem ersten Reaktor oder Reaktionsschritt das gewünschte Alkali- oder Erdalkalimetall-Cyclopentadienid separat hergestellt wird, um es dann in einem zweiten Reaktor oder Reaktionsschritt mit dem Metallsalz umzusetzen. Verfahren dieser Art sind in der US-A 2 870 183 und der GB-A 1 416 543 beschrieben.

Diese bekannten Verfahren haben den Nachteil, daß für eine Anlage mit zwei separaten Reaktionsbehältern hohe Investitionskosten notwendig sind. Führt man die Herstellung der Metallocene in zwei Reaktionsschritten in einem Reaktor durch, so ergibt sich eine geringe Auslastung des Reaktors bezogen auf die eigentliche Metallocenherstellung, außerdem sind Totzeiten zur Reinigung zwischen den jeweiligen Reaktionsschritten erforderlich und es muß genügend Behälterkapazität zur Zwischenspeicherung mindestens einer der Reaktanden vorhanden sein.

Aufgabe der vorliegenden Erfindung war es daher, den geschilderten Nachteilen abzuhelfen und ein verfahrenstechnisch weniger aufwendiges und wirtschaftlicheres Verfahren zur Herstellung von Metallocenen zur Verfügung zu stellen.

Demgemäß wurde ein Verfahren zur Herstellung von Metallocenen gefunden, wobei man ein Metallsalz mit mindestens einem Alkalimetall und mit ungesättigten, cyclischen Kohlenwasserstoffen in Gegenwart eines Lösungsmittels in einem Reaktionsschritt umsetzt.

Besonders geeignet ist das erfindungsgemäße Verfahren zur Herstellung von Metallocenen der allgemeinen Formel I 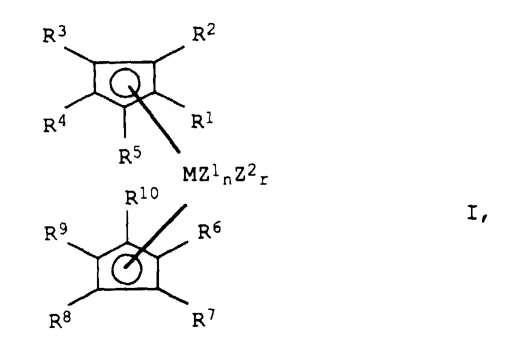 in der die Substituenten folgende Bedeutung haben:
- R¹ bis R¹⁰: Wasserstoff, C₁- bis C₁₀-Alkyl, 5- bis 7-gliedriges Cycloalkyl, das seinerseits C₁- bis C₆-Alkylgruppen als Substituenten tragen kann, C₆- bis C₁₅-Aryl oder Arylalkyl und wobei gegebenenfalls auch zwei benachbarte Reste gemeinsam für 4 bis 15 C-Atome aufweisende cyclische Gruppen stehen können, oder Si(R¹¹)₃,
- mit R¹¹: C₁- bis C₁₀-Alkyl, C₆- bis C₁₅-Aryl oder C₃- bis C₁₀-Cycloalkyl,
oder wobei die Reste R⁴ und R⁹ gemeinsam eine Gruppierung -[Y(R¹²R¹³]ₘ- bilden,
- mit Y: Silicium, Germanium, Zinn oder Kohlenstoff
- R¹², R¹³: Wasserstoff, C₁- bis C₁₀-Alkyl, C₃- bis C₁₀-Cycloalkyl oder C₆- bis C₁₅-Aryl
- m: 1,2,3 oder 4
- M: ein Metall der IV. bis VIII. Nebengruppe oder ein Metall der Lanthanidenreihe,
- Z¹, Z²: Fluor, Chlor, Brom, Jod, -OR¹⁴, -OOCR¹⁴, 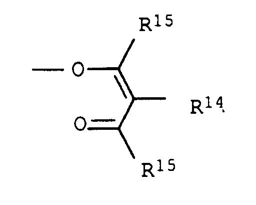 oder 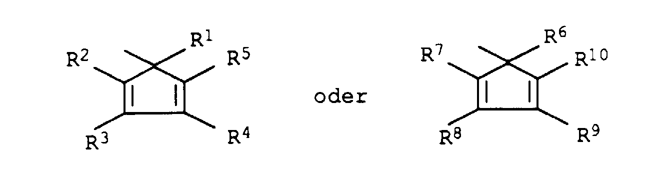
- mit R¹⁴: Wasserstoff oder C₁- oder C₂₀-Alkyl,
- R¹⁵: C₁- bis C₂₀-Alkyl,
- n: 0,1 oder 2
- r: 0,1 oder 2,
wobei die Summe n+r ebenfalls 0,1 oder 2 ist.

Unter der Bezeichnung Metallocene werden also solche Verbindungen verstanden, bei denen ein Übergangsmetallatom über Π-Bindungen mit ungesättigten cyclischen Kohlenwasserstoffresten verbunden ist, beispielsweise Cyclopentadienyl-, Fluorenyl- oder Indenylgruppen.

Bevorzugte Metallocene der allgemeinen Formel I sind solche, in denen die Substituenten folgende Bedeutung haben:
- R¹ bis R¹⁰: Wasserstoff, C₁- bis C₆-Alkyl oder wobei zwei benachbarte Reste gemeinsam für 4 bis 15 C-Atome, bevorzugt 8 bis 15 C-Atome, aufweisende cyclische Gruppen stehen,
- M: Titan, Zirkonium, Hafnium, Vanadium, Niob, Tantal, Chrom, Molybdän, Wolfram, Mangan, Eisen, Ruthenium, Osmium, Cobalt oder Nickel, insbesondere Titan, Zirkonium, Hafnium, Chrom oder Eisen
- Z¹, Z²: Chlor.

Bevorzugte Metallocene der allgemeinen Formel I sind auch solche, bei denen die ungesättigten cyclischen Kohlenwasserstoffreste 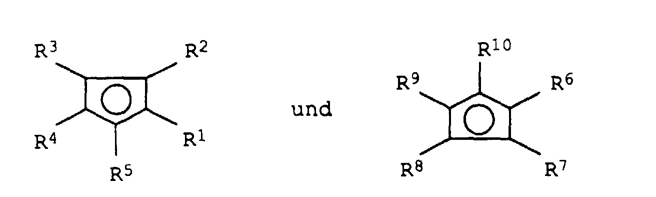 gleich sind.

Beispiele für besonders bevorzugte Metallocene der allgemeinen Formel I sind:
Bis(cyclopentadienyl)chrom, Bis(cyclopentadienyl)dichlorotitan, Bis(cyclopentadienyl)dichlorozirkonium, Bis(cyclopentadienyl)-dichlorohafnium und Bis(cyclopentadienyl)eisen.

Bei dem erfindungsgemäßen Verfahren werden bevorzugt Metallsalze der allgemeinen Formel II

MXₚL_{q} II

eingesetzt.

Bezüglich der Bedeutung sowie der bevorzugten Bedeutung von M sei auf das bei den Metallocenen der allgemeinen Formel I Gesagte verwiesen. Die Substituenten X bedeuten Fluor, Chlor, Brom, Jod, -OR¹⁴, -OOCR¹⁴ oder 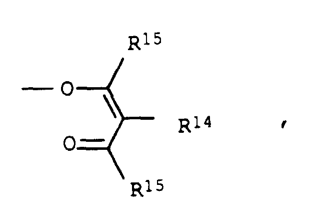 wobei R¹⁴ für Wasserstoff oder C₁- bis C₂₀-Alkyl, bevorzugt C₁- bis C₈-Alkyl steht und R¹⁵ für C₁- bis C₂₀-Alkyl, bevorzugt C₁- bis C₈-Alkyl. Bevorzugte Substituenten X sind Chlor. Bei mehreren Substituenten X können diese auch unterschiedliche Bedeutung haben. Der Substituent L steht für einen Neutralliganden, beispielsweise für ein tertiäres Amin wie Trimethylamin oder Triethylamin, für ein mehrkerniges tertiäres Amin wie N,N'-Tetramethylethylendiamin oder für ein aromatisches tertiäres Amin, beispielsweise Pyridin. Weiterhin kann L für einen aliphatischen offenkettigen oder cyclischen, ein- oder mehrwertigen Ether stehen, beispielsweise für Diethylether, Tetrahydrofuran oder 1,2-Dimethoxyethan.

Der Index p hängt von der Wertigkeit des Metalls M ab und steht für die Zahlen 2, 3, 4, 5 oder 6. Der Index q bedeutet 0, 1, 2, 3 oder 4, bevorzugt 0 oder 1.

Bevorzugte Metallsalze der allgemeinen Formel II sind CrCl₂, CrCl₃, TiCl₄, ZrCl₄, HfCl₄ und FeCl₂.

Als Alkalimetalle werden bei dem erfindungsgemäßen Verfahren bevorzugt Lithium, Natrium oder Kalium eingesetzt. Legierungen aus mehreren Alkalimetallen können ebenfalls verwendet werden. Bevorzugt wird das Alkalimetall in fein verteilter Form eingesetzt. Das Molverhältnis von Alkalimetall zu Metallsalz beträgt vorzugsweise 2:1 bis 20:1, insbesondere 2:1 bis 10:1.

Als ungesättigte, cyclische Kohlenwasserstoffe werden bei dem erfindungsgemäßen Verfahren bevorzugt 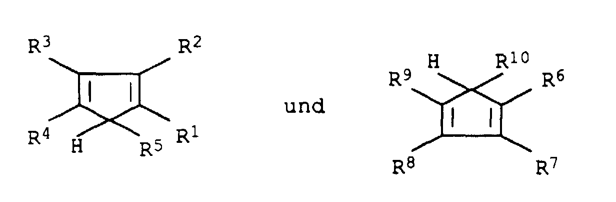 eingesetzt, wobei bezüglich der Bedeutung der Substituenten R¹ bis R¹⁰ sowie deren bevorzugter Bedeutung auf das bei den Metallocenen der allgemeinen Formel I Gesagte verwiesen sei.

Für den Fall, daß die Reste R⁴ und R⁹ gemeinsam eine Gruppierung -[Y(R¹²R¹³)]ₘ- bilden, werden als ungesättigte, cyclische Kohlenwasserstoffe schon die verbrückten Verbindungen eingesetzt.

Insbesondere werden also folgende ungesättigten, cyclischen Kohlenwasserstoffe verwendet:
Cyclopentadien, Inden und Fluoren.

Das Molverhältnis von ungesättigten, cyclischen Kohlenwasserstoffen zu Alkalimetallen liegt vorzugsweise im Bereich von 1:1 bis 10:1, insbesondere von 1:1 bis 5:1. Unter der Molmenge an ungesättigten, cyclischen Kohlenwasserstoffen wird hierbei die Gesamtmolmenge an ungesättigten, cyclischen Kohlenwasserstoffen verstanden, falls verschiedene davon eingesetzt werden. Werden als ungesättigte, cyclische Kohlenwasserstoffe solche eingesetzt, die eine Gruppierung -[Y(R¹²R¹³)]ₘ- aufweisen, so sind bei der Berechnung der Molmenge beide ungesättigte cyclische Systeme zu berücksichtigen. Werden die ungesättigten, cyclischen Kohlenwasserstoffe in molarem Überschuß, bezogen auf die Menge an Alkalimetallen, eingesetzt, so können diese ungesättigten, cyclischen Kohlenwasserstoffe auch für die Substituenten Z¹ bzw. Z² stehen.

Als Lösungsmittel eignen sich bei dem erfindungsgemäßen Verfahren solche, die mit den eingesetzten Reaktionspartnern nicht reagieren, in denen aber die Metallsalze wenigstens teilweise löslich sind. Als solche Lösungsmittel können aliphatische und aromatische Kohlenwasserstoffe, beispielsweise Heptan oder Toluol sowie offenkettige und cyclische Ether, beispielsweise Diethylether oder Tetrahydrofuran eingesetzt werden. Mischungen verschiedener Lösungsmittel können ebenfalls verwendet werden. Bevorzugt werden offenkettige und cyclische Ether.

Die Menge an Lösungsmittel ist an sich unkritisch, bevorzugt werden 10 bis 100 ml, bezogen auf 1 g Metallsalz eingesetzt.

Das erfindungsgemäße Verfahren kann bei Temperaturen im Bereich von -100 bis +200°C, bevorzugt von -80 bis +100°C, insbesondere von +10 bis +70°C und Drücken von 0,1 bis 100 bar, vorzugsweise 0,5 bis 2 bar durchgeführt werden. Die Reaktionszeiten liegen i.a. im Bereich von 0,1 bis 20 Stunden, vorzugsweise 0,5 bis 2 Stunden.

Vorzugsweise führt man das erfindungsgemäße Verfahren so durch, daß das Metallsalz in einem diskontinuierlich betriebenen Rührkessel mit dem Lösungsmittel versetzt wird, hierzu das Alkalimetall gegeben wird und dann, bevorzugt unter Rühren, die ungesättigten, cyclischen Kohlenwasserstoffe hinzugegeben werden.

Die Umsetzung erfolgt also in einem Reaktionsschritt und in einem Reaktor, d.h. in einer Reaktionszone.

Die nach dem erfindungsgemäßen Verfahren hergestellten Metallocene können nach den üblichen Methoden wie Kristallisation, Extraktion, Sublimation oder Chromatographie in reiner Form isoliert werden. Sie eignen sich beispielsweise als Katalysatoren, z.B. für die Polymerisation von Olefinen, als Stabilisatoren, als Kunststoff- und Treibstoffadditive und als Lichtschutzmittel.

Das erfindungsgemäße Verfahren zur Herstellung von Metallocenen zeichnet sich durch geringen verfahrenstechnischen Aufwand und hohe Wirtschaftlichkeit aus.

### Beispiele

### Beispiel A: Herstellung von Chrom(II)chlorid

Zu einer Suspension von 30,9 g wasserfreiem Chrom(III)chlorid (≙ 0,20 mol) und 15,2 g Chrompulver (≙ 0,29 mol) in 450 ml wasserfreiem Tetrahydrofuran (THF) wurden unter Argonatmosphäre 1 ml Acetylchlorid und 0,4 ml Methanol zur Depassivierung des metallischen Chroms gegeben. Das Gemisch wurde 7 Stunden unter Rückfluß gekocht, bis das violette Chrom(III)chlorid vollständig in das weiße Chrom(II)chlorid überführt war. Anschließend wurde während 30 Minuten überschüssiger Chlorwasserstoff durch Einleiten von Argon entfernt.

### Beispiele 1 und 2: Herstellung von Bis(cyclopentadienyl)chrom (Chromocen) in einem Reaktionsschritt

### Beispiel 1

In einem diskontinuierlich betriebenen Reaktor wurden bei Raumtemperatur zu 36,9 g des nach Beispiel A hergestellten Chrom(II)chlorids (≙ 0,3 mol) in THF 16,8 g Natrium (≙ 0,73 mol) in Form von würfelförmigen Stücken mit einer Kantenlänge von ca. 5 mm gegeben. Hierzu wurden unter Rühren bei 30°C 60,4 g frisch destilliertes Cyclopentadien (≙ 0,91 mol) innerhalb von 5 Minuten hinzugefügt. Durch Kühlung wurde die Reaktionstemperatur auf 30°C gehalten. Nach beendeter Reaktion wurde noch 1 Stunde unter Rückfluß gekocht. Anschließend wurde das Lösungsmittel bei Raumtemperatur im Vakuum entfernt. Aus dem trockenen Rückstand wurde das entstandene Chromocen durch Sublimation isoliert (Hochvakuum; 100 bis 150°C).
Ausbeute: 30,7 g (56,3 % d. Th.)
Schmelzpunkt: 173°C

| | | | | |
|---|---|---|---|---|
| Zusammensetzung: | ber: | 65,96 % C | 5,49 % H | 28,55 % Cr |
| | gef. | 65,9 % C | 5,6 % H | 28,5 % Cr |

### Beispiel 2

Analog zu Beispiel 1 wurden bei Raumtemperatur in einem diskontinuierlich betriebenen Reaktor zu 36,9 g des nach Beispiel A hergestellten Chrom(II)-chlorids in THF 16,8 g Natrium in Form von würfelförmigen Stücken mit einer Kantenlänge von ca. 5 mm gegeben. Hierzu wurden unter Rühren bei 30°C jedoch 96,8 g frisch destilliertes Cyclopentadien (≙ 1,46 mol) innerhalb von 2 Minuten hinzugefügt. Dabei erwärmte sich die Reaktionsmischung innerhalb von 5 Minuten auf 62°C (Siedetemperatur des THF). Nach 15 Minuten war die Reaktion abgeklungen und die Reaktionsmischung wurde durch Beheizen noch eine weitere Stunde unter Rückfluß am Sieden gehalten. Anschließend wurde das Lösungsmittel bei Raumtemperatur im Vakuum entfernt. Aus dem trockenen Rückstand wurde das entstandene Chromocen durch Sublimation isoliert.
Ausbeute: 38,8 g (71 % d. Th.)
Schmelzpunkt: 173°C

| | | | | |
|---|---|---|---|---|
| Zusammensetzung: | gef.: | 65,7 % C | 5,5 % H | 28,1 % Cr |

### Vergleichsbeispiel V1: Herstellung von Chromocen in zwei Reaktionsschritten

Analog zu Beispiel A wurden in einem Reaktor I aus einer Suspension von 30,1 g wasserfreiem Chrom(III)chlorid (≙ 0,19 mol) und 14,8 g Chrompulver (≙ 0,28 mol) in 400 ml wasserfreiem THF 35,6 g Chrom(II)chlorid (≙ 0,29 mol) in THF hergestellt. Parallel hierzu wurden in einem Reaktor II aus 13,8 g Natrium (≙ 0,60 mol) in Form in würfelförmigen Stücken mit einer Kantenlänge von ca. 5 mm in 200 ml wasserfreiem THF und 59,5 g frisch destilliertem Cyclopentadien (≙ 0,90 mol) 52,8 g Natriumcyclopentadienid (≙ 0,6 mol) hergestellt. Die so erhaltene Lösung von Natriumcyclopentadienid in THF wurde innerhalb von 3 Minuten zu dem Chrom(II)chlorid in THF in Reaktor I gegeben. Anschließend wurde die Reaktionsmischung 1 Stunde unter Rückfluß gekocht. Dann wurde das Lösungsmittel bei Raumtemperatur im Vakuum entfernt. Aus dem trockenen Rückstand wurde das entstandene Chromocen durch Sublimation isoliert.
Ausbeute: 46,1 g (87,3 % d. Th.)
Schmelzpunkt: 173°C

| | | | |
|---|---|---|---|
| Zusammensetzung: | 65,4 % C | 5,5 % H | 28,3 % Cr |

In allen Beispielen und Vergleichsbeispielen wurde bei der Elementaranalyse auf C, H und Cr gesondert untersucht. Weicht die Summe der gefundenen Prozentzahlen von 100 % ab, so ist dies auf die üblichen Meßfehler zurückzuführen.

## Patentansprüche

1. Verfahren zur Herstellung von Metallocenen, dadurch gekennzeichnet, daß man ein Metallsalz mit mindestens einem Alkalimetall und mit ungesättigten, cyclischen Kohlenwasserstoffen in Gegenwart eines Lösungsmittels in einem Reaktionsschritt umsetzt.

2. Verfahren nach Anspruch 1, dadurch gekennzeichnet, daß das Molverhältnis von Alkalimetallen zu Metallsalz im Bereich von 2:1 bis 20:1 liegt.

3. Verfahren nach den Ansprüchen 1 bis 2, dadurch gekennzeichnet, daß das Molverhältnis von ungesättigten, cyclischen Kohlenwasserstoffen zu Alkalimetallen im Bereich von 1:1 bis 10:1 liegt.

4. Verfahren nach den Ansprüchen 1 bis 3, dadurch gekennzeichnet, daß die Herstellung von Metallocenen bei Temperaturen im Bereich von -100 bis +200°C und Drücken von 0,1 bis 100 bar erfolgt.

5. Verfahren nach den Ansprüchen 1 bis 4, dadurch gekennzeichnet, daß als Metallsalze Verbindungen der allgemeinen Formel II
MXₚL_{q} II,
wobei
M für ein Metall der IV. bis VIII. Nebengruppe oder für ein Metall der Lanthanidenreihe steht,
X Fluor, Chlor, Brom, Jod, -OR¹⁴, -OOCR¹⁴ oder 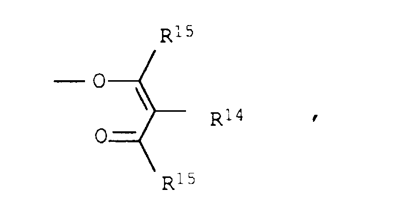 bedeutet,
mit R¹⁴ Wasserstoff oder C₁- bis C₂₀-Alkyl,
R¹⁵ C₁- bis C₂₀-Alkyl,
L ein tertiäres Amin oder einen Ether bedeutet,
p für die Zahlen 2, 3, 4, 5 oder 6 steht
und
q 0, 1, 2, 3 oder 4 bedeutet,
eingesetzt werden.

6. Verfahren nach den Ansprüchen 1 bis 5, dadurch gekennzeichnet, daß man es zur Herstellung von Metallocenen der allgemeinen Formel I 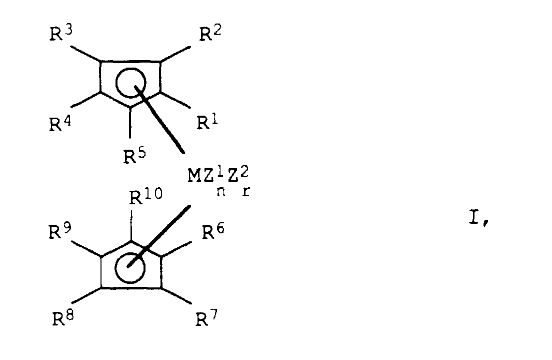 in der die Substituenten folgende Bedeutung haben:
R¹ bis R¹⁰ Wasserstoff, C₁- bis C₁₀-Alkyl, 5- bis 7-gliedriges Cycloalkyl, das seinerseits C₁- bis C₆-Alkylgruppen als Substituenten tragen kann, C₆- bis C₁₅-Aryl oder Arylalkyl und wobei gegebenenfalls auch zwei benachbarte Reste gemeinsam für 4 bis 15 C-Atome aufweisende cyclische Gruppen stehen können, oder Si(R¹¹)₃,
mit R¹¹ C₁- bis C₁₀-Alkyl, C₆- bis C₁₅-Aryl oder C₃- bis C₁₀-Cycloalkyl,
oder wobei die Reste R⁴ und R⁹ gemeinsam eine Gruppierung -[Y(R¹²R¹³]ₘ- bilden,
mit Y Silicium, Germanium, Zinn oder Kohlenstoff
R¹², R¹³ Wasserstoff, C₁- bis C₁₀-Alkyl, C₃- bis C₁₀-Cycloalkyl oder C₆- bis C₁₅-Aryl
m 1,2,3 oder 4
Z¹, Z² X oder 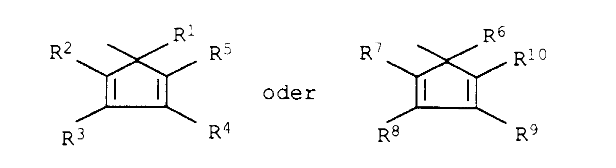
n 0,1 oder 2
r 0,1 oder 2,
wobei die Summe n + r ebenfalls 0,1 oder 2 ist, verwendet.

## Claims

1. A process for the preparation of a metallocene, wherein a metal salt is reacted with at least one alkali metal and with an unsaturated, cyclic hydrocarbon in the presence of a solvent in one reaction step.

2. A process as claimed in claim 1, wherein the molar ratio of alkali metal to metal salt is from 2 : 1 to 20 : 1.

3. A process as claimed in claim 1 or 2, wherein the molar ratio of unsaturated, cyclic hydrocarbon to alkali metal is from 1 : 1 to 10 : 1.

4. A process as claimed in any of claims 1 to 3, wherein the preparation of the metallocene is carried out at from -100 to +200°C and from 0.1 to 100 bar.

5. A process as claimed in any of claims 1 to 4, wherein the metal salt used is a compound of the formula II
MXₚL_{q} II,
where
M is a metal of subgroups IV to VIII or a metal of the lanthanide series,
X is a fluorine, chlorine, bromine, iodine, -OR¹⁴, -OOCR¹⁴ or 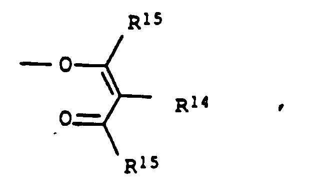
where R¹⁴ is hydrogen or C₁-C₂₀-alkyl,
R¹⁵ is C₁-C₂₀-alkyl,
L is a tertiary amine or an ether,
p is 2, 3, 4, 5 or 6 and
q is 0, 1, 2, 3 or 4.

6. A process as claimed in any of claims 1 to 5, which is used for the preparation of a metallocene of the formula I 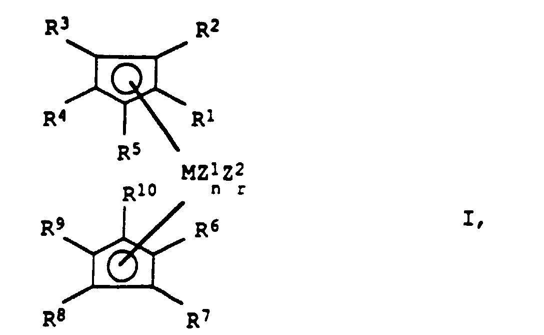 where
R¹ to R¹⁰ are each hydrogen, C₁-C₁₀-alkyl, 5-membered to 7-membered cycloalkyl which in turn may carry C₁-C₆-alkyl groups as substituents, C₆-C₁₅-aryl or arylalkyl, where two adjacent radicals together may furthermore be a cyclic group of 4 to 15 carbon atoms, or Si(R¹¹)₃, R¹¹ is C₁-C₁₀-alkyl, C₆-C₁₅-aryl or C₃-C₁₀-cycloalkyl, or R⁴ and R⁹ together form a group -[Y(R¹²R¹³)]ₘ-,
Y is silicon, germanium, tin or carbon,
R¹² and R¹³ are each hydrogen, C₁-C₁₀-alkyl, C₃-C₁₀-cycloalkyl or C₆-C₁₅-aryl,
m is 1, 2, 3 or 4,
M is a metal of subgroups IV to VIII or a metal of the lanthanide series,
Z¹ and Z² are each X or 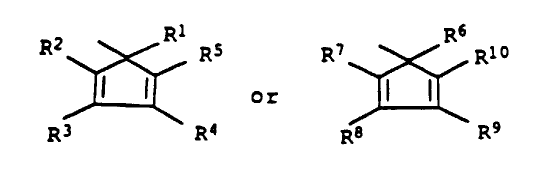
n and r are each 0, 1 or 2,
the sum n+r likewise being 0, 1 or 2.

## Revendications

1. Procédé de préparation de métallocènes, caractérisé en ce qu'on fait réagir en une étape réactionnelle un sel métallique avec au moins un métal alcalin et avec des hydrocarbures cycliques, insaturés, en présence d'un solvant.

2. Procédé suivant la revendication 1, caractérisé en ce que le rapport molaire entre les métaux alcalins et le sel métallique est de l'ordre de 2/1 à 20/1.

3. Procédé suivant l'une des revendications 1 et 2, caractérisé en ce que le rapport molaire entre les hydrocarbures cycliques, insaturés, et les métaux alcalins est de l'ordre de 1/1 à 10/1.

4. Procédé suivant l'une des revendications 1 à 3, caractérisé en ce que la préparation de métallocènes s'effectue à des températures de l'ordre de -100 à +200°C et à des pressions de 0,1 à 100 bars.

5. Procédé suivant l'une des revendications 1 à 4, caractérisé en ce que, comme sels métalliques, on met en oeuvre des composés de la formule générale II :
MXₚL_{q} (II)
dans laquelle
M représente un métal des groupes secondaires IV à VIII ou un métal de la série des lanthanides,
X représente du fluor, du chlore, du brome, de l'iode, -OR¹⁴, -OOCR¹⁴ ou 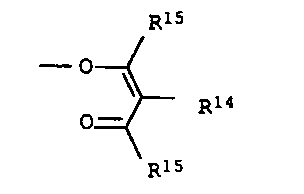 où
R¹⁴ représente de l'hydrogène ou un groupe alkyle en C₁-C₂₀,
R¹⁵ représente un groupe alkyle en C₁-C₂₀,
L représente une amine tertiaire ou un éther,
p représente les nombres 2, 3, 4, 5 ou 6, et
q représente 0, 1, 2, 3 ou 4.

6. Procédé suivant l'une des revendications 1 à 5, caractérisé en ce qu'on l'utilise pour la préparation de métallocènes de la formule générale I : 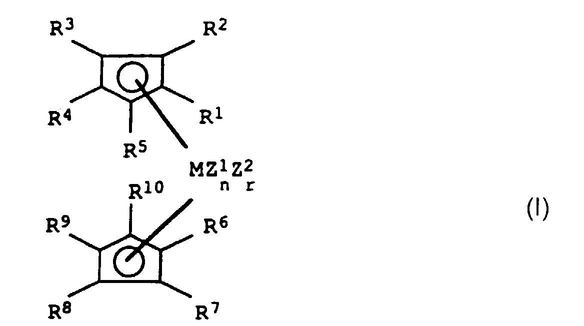 dans laquelle les substituants ont la signification suivante :
R¹ à R¹⁰ représente de l'hydrogène, un groupe alkyle en C₁-C₁₀, cycloalkyle pentagonal à heptagonal, qui à son tour peut porter des groupes alkyle en C₁-C₆ comme substituants, aryle en C₆-C₁₅ ou arylalkyle, deux radicaux voisins pouvant éventuellement aussi former conjointement des groupes cycliques présentant 4 à 15 atomes de C, ou Si(R¹¹)₃,
où R¹¹ représente un groupe alkyle en C₁-C₁₀, aryle en C₆-C₁₅ ou cycloalkyle en C₃-C₁₀,
les radicaux R⁴ et R⁹ pouvant former conjointement un groupement -[Y(R¹²R¹³)]ₘ-,
où Y représente du silicium, du germanium, de l'étain ou du carbone,
R¹² et R¹³ représentent de l'hydrogène, un groupe alkyle en C₁-C₁₀, cycloalkyle en C₃-C₁₀ ou aryle en C₆-C₁₅,
m est égal à 1, 2, 3 ou 4,
Z¹ et Z² représentent X ou 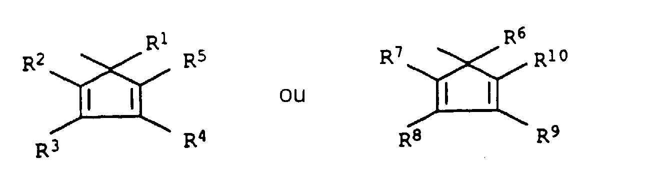
n est égal à 0, 1 ou 2,
r est égal à 0, 1 ou 2,
la somme de n + r étant également égale à 0, 1 ou 2.
